# EUROPEAN PATENT APPLICATION

(11) **EP 2 591 676 A1**
(43) Date of publication of application: **15.05.2013**
(21) Application number: 12007471.1
(22) Date of filing: 02.11.2012
(51) Int. Cl.: A01N 59/20, C04B 22/00, C04B 22/06, C04B 41/00

(54) **Concrete mixture, concrete, and concrete product with increased resistance to the growth of moss and/or lichen**

(30) Priority: 10.11.2011 CZ 201125111 U
(71) Applicant: Effmert, Vilem, 39201 Sobeslav (CZ); Ceske Vysoke Uceni Technicke V Praze, 166 29 Praha 6 (CZ)
(72) Inventor: Effmert, Vilém, 39201 Sobeslav (CZ)
(74) Representative: Sedlák, Jirí

(57) **Abstract**

The invention relates to a concrete mixture, concrete, and a concrete product with increased resistance to the growth of moss and/or lichen. The concrete mixture for the production of concrete includes cement, aggregate, and water with the known method. The essence of the invention is that in addition to the aforementioned ingredients, the concrete mixture contains from 1 to 30% (by weight) of at least one oxide of copper and/or other water-insoluble copper compound based on the weight of the cement contained in the concrete mixture.

## Description

### Field of the invention

The invention relates to construction, specifically concrete mixes, particularly for the production of concrete construction products for outdoor use such as e.g. roof coverings, paving, palisades, visible structural components, as well as concrete and concrete construction products prepared from such concrete mixes, with increased resistance to the growth of moss and/or lichens.

### Background of the invention

There is a wide array of known products and procedures for the protection of finished concrete construction products, particularly roof coverings, from the formation of moss. A roof covering or cladding is known from utility model CZ11095 in which the element is formed from a double-layered copper plating unit, where the empty space between the plates is filled in with copper wool or mesh. The element, used as a ridge tile, permits increased formation of copper sulphate during rainfall, and the resulting run-off prevents the formation of moss on concrete roof coverings.

According to patent CZ296225, a known method of moss and lichen liquidation on roofs consists in the application of a copper or cuprous saline solution and in the stabilization of such applied salts in the subsequent effect of the carbonate or bicarbonate solution. The preparation for executing this method of liquidation consists of separated elements of copper or cuprous saline solutions and carbonate or bicarbonate solutions which are applied on the roof consecutively.

According to patent application CZ 2008-91 and utility model CZ 18495, a similar method and preparation is known for destroying mosses and lichens which need not be applied in two phases. The essence of the preparation lies in the fact that it consists of 1 to 5% of copper or cuprous (by weight) water insoluble compound and 95 to 99% of water (by weight). It also may contain a substance which prevents sedimentation during the application of the preparation and which increases the preparation's adhesion to the substrate, i.e. a borax aqueous solution.

According to patent application CZ 2009-468 and utility model CZ20122, a solution is known for the protection of construction materials of organic and inorganic origin which contains ionic silver particles dispersed in pure untreated chemical water.

All aforementioned preparations relate to the subsequent treatment of finished concrete products produced from standard concrete mixtures, and their disadvantage lies primarily in the necessity of executing subsequent treatments of, for example, roofing tiles.

There are other concrete products known from literature, the properties of which are modified directly during manufacture in such a way so as to exhibit increased resistance to moss/lichen formation. This modification is such, that the concrete mixture is modified during preparation by adding soluble copper salts, especially copper sulphate or copper chloride. The disadvantage of this technique, of course, lies in the fact that sulphates (and chlorides in some concretes) are the cause of "concrete corrosion", in that they react with the components of the concrete to form reactants with increased volume. The stress caused by these components disturbs the concrete, resulting in cracks and joints. Moreover, soluble copper compounds flush out of the concrete mixture over time and cease to be effective, which means that the treatment must be repeated. This is a labour-intensive process, difficult, and results in extra expenses for maintenance.

The task of the invention is to create a concrete mixture and concrete product which would remove the aforementioned insufficiencies, i.e. remove the disadvantages of the known modifications to concrete mixtures, especially internal stress and concrete corrosion, while ensuring a long-term stable effect of resistance to the growth of moss and/or lichen.

### Summary of the invention

The formulated task is resolved by the creation of a concrete mixture, concrete, and a concrete product with increased resistance to the growth of moss and/or lichen in accordance with this invention.

The concrete mixture for the production of concrete includes cement, aggregate, and water with the known method. The essence of the invention is that in addition to the aforementioned ingredients, the concrete mixture contains from 1 to 30% (by weight) of at least one oxide of copper and/or other water-insoluble copper compound based on the weight of the cement contained in the concrete mixture. It has been confirmed that copper oxides and/or other water-insoluble copper compounds act as a long-term inhibitor to the growth of moss and lichen in concretes produced from the aforementioned concrete mixture, while in contrast to soluble copper compounds such as copper sulphate or copper chloride they do not cause concrete corrosion and do not flush out.

In an advantageous embodiment of the invention for commonly used concrete mixtures, the content of at least one copper oxide and/or other water-insoluble copper compound is at least 5 to 10% by weight of the amount of cement contained in the concrete mixture. Higher concentrations would be used, for example, for outdoor concrete screeds.

In another advantageous embodiment of concrete mixture according to the invention, the water-insoluble copper compound is formed by an inert copper salt or by a mixture of inert copper salts. It is advantageous to use alkaline copper carbonate CuCO₃. Cu(OH)₂ in the form of mineral malachite. This ingredient is commonly found in nature and is easily accessible on the market, even though natural malachite is expensive. It is possible, however, to use other alkaline copper carbonites, for example azurite Cu₃(CO₃)₂(OH)₂. Malachite is added to concrete mixtures as finely ground particles with maximum grain size of 0.25 mm. Another option is to use very fine alkaline copper carbonate produced from a reaction of copper salts with alkaline carbonates.

Another subject of the invention is a dry concrete mixture, the composition of which, including the preferred designs, is exactly the same as the aforementioned concrete mixtures with the only difference being that the dry concrete mixture does not contain water.

The subject of the invention, however, is primarily finished concrete or a finished concrete product for outdoor use, such as roof covering, outdoor paving, paving, palisades, sidewalks, rain drain, visible structural components, etc. The essence of the concrete or concrete product according to the invention is that it is created from a concrete mixture or dry concrete mixture as described above. The concrete or concrete product, then, contains a volume of from 1 to 30% (by weight, with an advantage of 5 to 10% by weight) at least one copper oxide and/or other water-insoluble copper compound as related to the weight of the cement contained in the mixture. In addition to insoluble copper oxide, water-insoluble inert copper salt may be used, as may a mixture of inert copper salts or complex copper compounds, with alkaline copper carbonate Cu₂CO₃(OH)₂ used with advantage.

The advantages of the concrete mixture, concrete, and concrete product in accordance with the invention lies especially in the inert behaviour of the insoluble copper compounds used. During their use, concrete corrosion does not occur, meaning that internal stress does not occur which would later lead to cracks which are subject to holding water and later freezing, resulting in the destruction of the concrete. The long life span of the concrete and concrete product is related to the long-term effect of the insoluble copper compounds that do not flush out under the influence of rain and time, and the resistance of the concrete or concrete product to the growth of moss and/or lichen thus remains stable over the long term. A great advantage lies in the fact that concrete or concrete products manufactured in this way do not require subsequent treatments, thus easing and improving their maintenance, particularly in roofs.

### Detailed description of the preferred embodiments

It should be understood that the following described and illustrated specific examples of the realization of the invention are presented solely for illustrative purposes and not as a limitation of the examples of the invention's design for the cases indicated. Experts who are familiar with the state of art shall find, or using routine experimentation will be able to determine, a larger or smaller number of equivalents to the specific embodiments of the invention which are specifically described here. These equivalents shall also be included into the scope of the claims.

### Example 1

### Concrete mixture with copper oxide

cement (CEM I 32.5) 450 kg; copper oxide 30 kg; small aggregates with grain size 0-4 mm 1650 kg; water up to 0.55% of cement weight.

### Example 2

### Concrete mixture with cuprous oxide

cement (CEM I 32.5) 450 kg; cuprous oxide 20 kg; small aggregates with grain size 0-4 mm 1650 kg; water up to 0.55% of cement weight.

### Example 3

### Concrete mixture with alkaline cupric carbonate

cement (CEM I 32.5) 450 kg; alkaline cupric carbonate 40 kg (natural or synthetic); small aggregates with grain size 0-4 mm 1650 kg; water up to 0.55% of cement weight.

### Example 4

### Dry concrete mixture with copper oxide

cement (CEM I 32.5) 450 kg; copper oxide 30 kg; dry small aggregates with grain size 0-4 mm 1500 kg.

### Example 5

### Dry concrete mixture with cuprous oxide

cement (CEM I 32.5) 450 kg; cuprous oxide 20 kg; dry small aggregates with grain size 0-4 mm 1500 kg.

### Example 6

### Dry concrete mixture with alkaline cupric carbonate

cement (CEM I 32.5) 450 kg; alkaline cupric carbonate 40 kg; dry small aggregates with grain size 0-4 mm 1500 kg; water up to 0.55% of cement weight.

### Example 7

Manufacture of concrete product, e.g. roof coverings, paving, palisades, etc. from concrete mixture according to any of the previous examples.

### Example 8

Concrete screed for finished version of visible concrete products e.g. roof coverings, paving, palisades, rain drains, etc. produced from concrete mixture according to any of examples 1 to 6.

### Industrial applicability

Concrete mixtures, concrete, and concrete products according to the invention may be used for any kind of outdoor structural elements and applications for which increased resistance to the growth of moss and/or lichen is desirable.

## Claims

1. Concrete mixture for the production of concrete comprising cement, aggregate and water, **characterized in that** concrete mixture contains of 1 to 30% (by weight) of at least one copper oxide and/or other water-insoluble copper compound as related to the amount of cement (by weight) contained in the concrete mixture.

2. Concrete mixture according to claim 1, **characterized in that** the content of at least one copper oxide and/or other water-insoluble copper compound is in the range of 5 to 10% (by weight) as related to the amount of cement (by weight) contained in the concrete mixture.

3. Concrete mixture according to claim 1 or 2, **characterized in that** the water-insoluble copper compound is an inert copper salt or mixture of inert copper salts.

4. Concrete mixture according to claim 1 or 2, **characterized in that** the water-insoluble copper compound is an inert cupric salt or mixture of inert cupric salts.

5. Concrete mixture according to claim 3, **characterized in that** the copper salt is a cupric carbonate hydroxide CuCO3 Cu(OH)2 in a form of finely ground particles.

6. Dry concrete mixture for the production of concrete comprising cement and aggregate, **characterized in that** dry concrete mixture contains of 1 to 30% (by weight) of at least one copper oxide and/or other water-insoluble copper compound as related to the amount of the cement (by weight) contained in the concrete mixture.

7. Dry concrete mixture according to claim 6, **characterized in that** the content of at least one copper oxide and/or other water-insoluble copper compound is in the range of 5 to 10% (by weight) as related to the amount of cement (by weight) contained in the dry concrete mixture.

8. Dry concrete mixture according to claim 6 or 7, **characterized in that** the water-insoluble copper compound is an inert copper salt or mixture of inert copper salts.

9. Dry concrete mixture according to claim 8, **characterized in that** the copper salt is a cupric carbonate hydroxide CuCO3 Cu(OH)₂ in a form of finely ground particles.

10. Concrete **characterized in that** it is formed from a concrete mixture according to at least one of claims 1 to 5 or from a dry concrete mixture according to at least one of claims 6 to 10.

11. Concrete product for outdoor use, especially roof covering, paving, palisades, sidewalk, rain drains, visible structural components, etc., **characterized in that** it is formed from a concrete mixture according to at least one of claims 1 to 5 or from a dry concrete mixture according to at least one of claims 6 to 10.
